# EUROPÄISCHE PATENTANMELDUNG

(11) **EP 1 510 362 A2**
(43) Veröffentlichungstag der Anmeldung: **02.03.2005**
(21) Anmeldenummer: 04020532.0
(22) Anmeldetag: 30.08.2004
(51) Int. Cl.: B44C 5/04, B41M 1/34

(54) **Sichtelement und Verfahren zu seiner Herstellung**

(30) Priorität: 30.08.2003 DE 10340116; 02.09.2003 DE 10340754
(71) Anmelder: Tampoprint AG, 70825 Korntal-Münchingen (DE)
(72) Erfinder: Philipp, Wilfried, 70806 Kornwestheim (DE)
(74) Vertreter: Dreiss, Fuhlendorf, Steimle & Becker

(57) **Zusammenfassung**

Die Erfindung betrifft ein Sichtelement mit wenigstens einer Sichtseite aus Glas, wobei die Sichtseite mit einer visuell wahrnehmbaren Dekoration versehen ist; nach der Erfindung ist die Dekoration von einer Lösemitteldruckfarbe gebildet, die im Inkjet-Druckverfahren direkt auf eine unbeschichtete Glasoberfläche der Sichtseite aufgebracht ist.

## Beschreibung

Die Erfindung betrifft ein Sichtelement mit wenigstens einer Sichtseite aus Glas, wobei die Sichtseite mit einer visuell wahrnehmbaren Dekoration versehen ist.

Der vorstehend gewählte Begriff des Sichtelements ist in weitester Form zu verstehen. Es kann sich hierbei um eine Glasscheibe, insbesondere eine Flachglasscheibe, oder um einen Teil eines Informationsträgers oder Raumteilers oder dergleichen handeln. Bei der visuell wahrnehmbaren Dekoration kann es sich auch um visuell wahrnehmbare Informationen, beispielsweise auf einem Warn- oder Werbehinweisschild, handeln.

Das Dekorieren von Glas ist bekannt. Neben dem Handbemalen von Glasoberflächen wird Siebdrucktechnik, Schablonentechnik und Offsetdruck eingesetzt. Dies erfordert eine Vorbehandlung der Glasoberflächen insbesondere das Aufbringen von Untergrundschichten. Es ist auch bekannt, bedruckte Folien auf die Glasoberfläche aufzubringen oder mittels Transferfolien, welche die Dekoration auf die Glasoberfläche übertragen, zu arbeiten. Es wurde auch bereits der Vorschlag unterbreitet, UV-Farben, also unter Einfluss von ultravioletter Strahlung aushärtbare Farben, im Inkjet-Druckverfahren aufzubringen. Auch hierfür ist eine Vorbeschichtung der Glasoberfläche erforderlich. Ferner ist eine Härteeinrichtung mit einer UV-Strahlungsquelle erforderlich, was extrem aufwendig ist. Zudem sind UV-Farben lasierend, also wenig deckend, was weitere Nachteile mit sich bringt. Auch lassen sich UV-Farben mit einem üblichen Glasreiniger abtragen; ihr Anhaftungsvermögen auf Glasoberflächen ist daher für manche Anwendungen unzureichend.

Wann immer Glasoberflächen mit einer Vorbeschichtung (Primer) und anschließend mit einer Dekoration versehen werden, stellt sich ein ganz wesentliches Problem: Entweder muss die Vorbeschichtung unter Reinstraumtechnologie aufgebracht werden, was sehr aufwendig ist, oder es müssen Einschlüsse von Schmutzpartikeln, Staubpartikeln oder Fremdkörpern jeder Art, auch mikroskopisch kleine Wassertröpfchen, zwischen der Glasoberfläche und der Vorbeschichtung hingenommen werden. Diese lassen sich dann später nicht mehr entfernen. Sie sind in Bereichen außerhalb der später aufzubringenden Dekoration in störender Weise sichtbar. Beispielsweise können sich Newtonsche Ringe oder sonstige Beugungserscheinungen ausbilden. Gerade dies ist aber bei Sichtelementen in höchstem Maße störend.

Der vorliegenden Erfindung liegt die Aufgabe zugrunde, ein Sichtelement der eingangs genannten Art zu schaffen, bei dem die Dekoration in einfacher und wirtschaftlicher Weise, jedoch gut deckend und dauerhaft, aufbringbar ist. Es soll ferner ein qualitativ hochstehendes Sichtelement ohne störende Einschlüsse der vorstehend genannten Art hergestellt werden können.

Diese Aufgabe wird bei einem Sichtelement der genannten Art erfindungsgemäß dadurch gelöst, dass die Dekoration von einer Lösemitteldruckfarbe gebildet ist, die im Inkjet-Druckverfahren direkt auf eine unbeschichtete Glasoberfläche der Sichtseite aufgebracht ist.

Es hat sich gezeigt, dass das prozesstechnische Aufbringen von Lösemittelfarben direkt auf nicht vorbeschichtete Glasoberflächen durch Einsatz von Inkjet-Druckverfahren erreichbar ist. Unter Verwendung von Inkjet-Druckverfahren ist es nämlich möglich, Lösemitteldruckfarben im geeigneten Viskositätsbereich zu verwenden und in einer solchen verhältnismäßig dünnen Schichtstärke aufzubringen, dass das Verlaufen auf der Glasoberfläche ein technisch beherrschbares Problem darstellt. Durch das Aufstrahlen der Lösemitteldruckfarbe im Inkjet-Druckverfahren wird schon eine Vorverflüchtigung des Lösemittels erreicht, welche das Haftverhalten der Lösemitteldruckfarben auf einer unbeschichteten Glasoberfläche verbessert. Durch das Aufstrahlen der Lösemitteldruckfarbe wird in überraschender Weise das Haftverhalten der mikroskopisch kleinen Lösemitteltröpfchen derart verbessert, dass auch hochwertige Dekorationen in gut deckender Qualität und gerade bei sehr hoher Auflösung in Photoqualität hergestellt werden können. Die Nachteile herkömmlicher Methoden der eingangs geschilderten Art bestehen nicht.

Auch die Nachteile der Verwendung von UV-Farben und deren aufwendige Verarbeitung entfallen. Dadurch, dass auf eine flächendeckende Vorbeschichtung als Haftgrund für die Dekoration verzichtet wird, stellt sich nicht das Problem der Schmutzeinschlüsse oder das Erfordernisses des Einsatzes von Reinstraumtechnologie.

Es erweist sich als vorteilhaft, dass die Viskosität der Lösemitteldruckfarbe im Moment des Aufstrahlens so gewählt ist, dass die Farbe auf der Glasoberfläche nicht verläuft, sondern in der aufgebrachten Form verbleibt. Je höher die Viskosität der Lösemitteldruckfarbe im Moment des Aufstrahlens gewählt ist, umso weniger neigt die Lösemitteldruckfarbe dazu, beim direkten Aufbringen auf die Glasoberfläche zu verlaufen. Es hat sich eine Viskosität der Lösemitteldruckfarbe im Moment des Aufstrahlens von 5 bis 20 mPas, insbesondere von 6 - 18 mPas, insbesondere von 6 - 15 mPas, insbesondere von 7 - 12 mPas als zweckmäßig erwiesen.

Es erweist sich ferner als vorteilhaft, wenn die Schichtdicken hierbei nicht zu dick gewählt werden, damit das Verdunstungsverhalten der Lösemitteldruckfarbe derart ist, dass das Lösemittel rasch verdunstet. Je höher das Verdunstungsverhalten der Lösemitteldruckfarbe eingestellt ist, desto rascher verdunstet das Lösemittel nach dem Aufstrahlen auf die Glasoberfläche. Auch durch diese Maßnahme kann ein Verlaufen der Druckfarbe verhindert werden, und einem raschen Anhaften und Durchtrocknen der aufgestrahlten Dekoration Vorschub geleistet werden.

Es erweist sich des Weiteren als besonders vorteilhaft, wenn die Glasoberfläche vor dem Aufstrahlen der Lösemitteldruckfarbe hochtemperaturbehandelt wurde, beispielsweise durch Abflammen. Hierdurch können mikroskopische Flüssigkeitströpfchen und Feuchtigkeit, welche die Anhaftung der Lösemitteldruckfarben auf der unbehandelten Glasoberfläche beeinträchtigen könnten, entfernt werden.

Für einzelne Anwendungen erweist es sich als vorteilhaft, dass die die Dekoration aufweisende Sichtseite mit einem weiteren Glaselement überdeckt ist. Es könnte sich also bei dem Sichtelement um eine Verbundglasscheibe handeln. Beispielsweise könnte das Sichtelement eine Sicherheitsglasscheibe sein. Die Dekoration ist solchenfalls geschützt und weder aggressiven Umwelteinflüssen noch mechanischer Abnutzung ausgesetzt.

Nach einer weiteren Ausführungsform der vorliegenden Erfindung ist das Sichtelement auf seiner Sichtseite mit einer die Dekoration überdeckenden insbesondere durchsichtigen Beschichtung oder Deckschicht, bei der es sich insbesondere um einen Klarlack handeln kann, versehen. Die Beschichtung könnte in vorteilhafter Weise von einer pigmentlosen Lösemitteldruckfarbe gebildet sein.

Insbesondere kann durch die Deckschicht die Kratzfestigkeit, Wasserfestigkeit etc. erhöht werden. Neben glasklaren Deckschichten können auch mattierte oder optische Effekte erzielende Deckschichten eingesetzt werden. Die Deckschichten können auch farbig sein. Es kann hierzu vorteilhaft vorgesehen sein, als Deckschicht ein Mehrkomponenten-Acrylharzsystem einzusetzen.

Wie bereits eingangs erwähnt, kann das erfindungsgemäße Sichtelement eine Flachglasscheibe sein oder es kann sich hierbei um einen Teil eines Informationsträgers, eines Raumteilers oder eines Gebäudebauelements, insbesondere eines Fassadenbauteils, eines Fensters oder einer Tür, handeln.

Die vorliegende Erfindung betrifft auch ein Verfahren zum Herstellen eines Sichtelements der in Rede stehenden Art. Dieses Verfahren ist erfindungsgemäß dadurch gekennzeichnet, dass die Dekoration im Inkjet-Druckverfahren unter Verwendung einer Lösemitteldruckfarbe direkt auf eine unbeschichtete Glasoberfläche der Sichtseite des Sichtelements aufgebracht ist.

Hierfür kann in vorteilhafter Weise ein Flachbettdrucker verwendet werden. Die aufzustrahlende Dekoration im Sinne einer an sich beliebigen visuell wahrnehmbaren Information im weitesten Sinne kann durch elektronische Ansteuerung eines Inkjet-Druckers bzw. des Inkjet-Druckkopfes, bei dem es sich vorteilhafterweise um einen piezogesteuerten Inkjet-Druckkopf handelt, erfolgen.

Um das Anhaften der Lösemitteldruckfarbe auf der Glasoberfläche zu optimieren und einem Verlaufen der Lösemitteldruckfarbe möglichst entgegenzuwirken, wird vorgeschlagen, die Viskosität der Lösemitteldruckfarbe entsprechend zu wählen, je nach Oberflächenbeschaffenheit der Glasoberfläche erweist es sich als vorteilhaft, eine hierauf durch wenige Versuche einstellbare Viskosität der Farbe zu wählen.

In vorteilhafter Ausbildung der Erfindung hat sich eine Viskosität der Lösemitteldruckfarbe im Moment des Aufstrahlens von 5 bis 20 mPas, insbesondere von 6 - 18 mPas, insbesondere von 6 - 15 mPas, insbesondere von 7 - 12 mPas als vorteilhaft erwiesen.

Es erweist sich ferner als besonders vorteilhaft, dass die Dekoration direkt auf eine unbeschichtete Glasoberfläche aufgebracht wird. Es wäre auch denkbar, eine Haftvermittlerschicht in einem vorhergehenden Verfahrensschritt auf die Glasoberfläche aufzubringen. Hierfür wäre aber Reinstraumtechnologie erforderlich, um Schmutzeinschlüsse zu verhindern. Nach der Erfindung wurde aber festgestellt, dass unter Anwendung des Inkjet-Druckverfahrens auf eine Vorbeschichtung der Glasoberfläche verzichtet werden kann. Es erweist sich hier aber als vorteilhaft, wenn vor dem Aufbringen der Dekoration die Glasoberfläche gereinigt wird. Insbesondere erweist es sich als vorteilhaft, wenn dabei Adhäsionsschichten an der Glasoberfläche entfernt werden, insbesondere eine Hochtemperaturbehandlung , vorzugsweise durch Abflammen der Glasoberfläche durchgeführt wird.

Gegenüber dem seitherigen Vorgehen erweist sich das erfindungsgemäße Sichtelement insofern als vorteilhaft, als keine Folie bedruckt werden muss, die dann auf eine Glasoberfläche aufgebracht wird oder nur als Transfermittel für die Dekoration dient. Da der Aufdruck direkt im Inkjet-Druckverfahren ausgeführt ist, sind keine phototechnischen Vorarbeiten erforderlich. Es werden keine Chemikalien benötigt, und es fallen auch keine Abfälle an, die die Umwelt belasten. Auch sehr kleine Serien und sogar einzelne Aufdrucke sind kostengünstig herstellbar. Es können Dekorationen softwaremäßig realisiert und hinterlegt werden oder durch Kopiervorgänge erfasst und weiter digital verarbeitet und gespeichert und bei Bedarf für die Ausführung des Druckvorganges abgerufen werden.

Es erweist sich des Weiteren als besonders vorteilhaft, dass die aufgedruckte Dekoration in einer Auflösung von 300 dpi bis 2400 dpi, insbesondere von 600 dpi bis 1200 dpi, aufgebracht ist. Eine derartige Dekoration besitzt Photoqualität.

## Patentansprüche

1. Sichtelement mit wenigstens einer Sichtseite aus Glas, wobei die Sichtseite mit einer visuell wahrnehmbaren Dekoration versehen ist, **dadurch gekennzeichnet, dass** die Dekoration von einer Lösemitteldruckfarbe gebildet ist, die im Inkjet-Druckverfahren direkt auf eine unbeschichtete Glasoberfläche der Sichtseite aufgebracht ist.

2. Sichtelement nach Anspruch 1, **dadurch gekennzeichnet, dass** die Viskosität der Lösemitteldruckfarbe so gewählt ist, dass die Farbe auf der Glasoberfläche nicht verläuft sondern in der aufgebrachten Form verbleibt.

3. Sichtelement nach Anspruch 1 oder 2, **dadurch gekennzeichnet, dass** das Verdunstungsverhalten der Lösemitteldruckfarbe so gewählt ist, dass das Lösemittel rasch verdunstet

4. Sichtelement nach einem der vorstehenden Ansprüche, **dadurch gekennzeichnet, dass** die die Dekoration aufweisende Sichtseite mit einem weiteren Glaselement überdeckt ist.

5. Sichtelement nach einem der vorstehenden Ansprüche, **dadurch gekennzeichnet, dass** das Sichtelement auf seiner Sichtseite mit einer die Dekoration überdeckenden insbesondere durchsichtigen Beschichtung oder Deckschicht, insbesondere aus einem Klarlack, versehen ist.

6. Sichtelement nach Anspruch 5, **dadurch gekennzeichnet, dass** die Deckschicht wasserfest und/oder kratzfest ist und insbesondere ein Mehrkomponenten-Acrylharzsystem umfasst.

7. Sichtelement nach Anspruch 5, **dadurch gekennzeichnet, dass** die Beschichtung von einer pigmentlosen Lösemitteldruckfarbe gebildet ist.

8. Sichtelement nach einem der vorstehenden Ansprüche, **dadurch gekennzeichnet, dass** das Sichtelement eine Flachglasscheibe ist.

9. Sichtelement nach Anspruch einem der vorstehenden Ansprüche, **dadurch gekennzeichnet, dass** das Sichtelement Teil eines Informationsträgers, eines Raumteilers oder eines Gebäudebauelements, insbesondere eines Fassadenbauteils, eines Fensters oder einer Tür, ist.

10. Sichtelement nach Anspruch einem der vorstehenden Ansprüche, **dadurch gekennzeichnet, dass** die Dekoration in einer Auflösung von 300 dpi - 2400 dpi, insbesondere von 600 dpi - 1200 dpi aufgebracht ist.

11. Verfahren zum Herstellen eines Sichtelements nach dem Oberbegriff des Anspruchs 1, **dadurch gekennzeichnet, dass** die Dekoration im Inkjet-Druckverfahren unter Verwendung einer Lösemitteldruckfarbe direkt auf eine unbeschichtete Glasoberfläche der Sichtseite des Sichtelements aufgebracht ist.

12. Verfahren nach Anspruch 11, **dadurch gekennzeichnet, dass** die Viskosität der Lösemitteldruckfarbe so gewählt wird, dass die Farbe auf der Glasoberfläche nicht verläuft sondern in dem aufgebrachten Muster verbleibt.

13. Verfahren nach Anspruch 11 oder 12, **dadurch gekennzeichnet, dass** die Viskosität der Lösemitteldruckfarbe im Moment des Aufstrahlens von 5 bis 20 mPas, insbesondere von 6 - 18 mPas, insbesondere von 6 - 15 mPas, insbesondere von 7 - 12 mPas beträgt.

14. Verfahren nach Anspruch 11, 12 oder 13, **dadurch gekennzeichnet, dass** das Verdunstungsverhalten der Lösemitteldruckfarbe so gewählt wird, dass das Lösemittel rasch verdunstet, bevor die Farbe auf der Glasoberfläche verlaufen kann.

15. Verfahren nach einem der Ansprüche 11 - 14, **dadurch gekennzeichnet, dass** vor dem Aufbringen der Dekoration die Glasoberfläche gereinigt wird.

16. Verfahren nach einem der Ansprüche 11 - 14, **dadurch gekennzeichnet, dass** vor dem Aufbringen der Dekoration die Glasoberfläche einer Hochtemperaturbehandlung unterzogen wird, insbesondere abgeflammt wird.
